Europäisches Patentamt

European Patent Office

Office européen des brevets

(19)

(11) Veröffentlichungsnummer : **0 180 583**
**B1**

(12) **EUROPÄISCHE PATENTSCHRIFT**

(45) Veröffentlichungstag der Patentschrift :
20.01.88

(21) Anmeldenummer : 84902518.4

(22) Anmeldetag : 27.06.84

(86) Internationale Anmeldenummer :
PCT/EP 84/00195

(87) Internationale Veröffentlichungsnummer :
WO/8500860 (28.02.85 Gazette 85/05)

(51) Int. Cl.⁴ : **F 16 H   5/12**

(54) DRUCKMITTELBETÄTIGTE SCHALTEINRICHTUNG.

(30) Priorität : 12.08.83 PCT/EP83/00216

(43) Veröffentlichungstag der Anmeldung :
14.05.86 Patentblatt 86/20

(45) Bekanntmachung des Hinweises auf die Patenterteilung : 20.01.88 Patentblatt 88/03

(84) Benannte Vertragsstaaten :
DE FR GB SE

(56) Entgegenhaltungen :
DE-A- 2 036 858
GB-A- 1 179 426
GB-A- 1 271 229

(73) Patentinhaber : ZAHNRADFABRIK FRIEDRICHSHA-
FEN AKTIENGESELLSCHAFT
Löwentaler Strasse 100 Postfach 2520
D-7990 Friedrichshafen 1 (DE)

(72) Erfinder : RÖGNER, Horst
Happenweilerstr. 7
D-7997 Immenstaad (DE)
Erfinder : SCHACHERER, Roland
Kindergartenweg 1
D-7716 Geisingen 3 (DE)
Erfinder : BIEBER, Gerold
Mühlengärten 7
D-7993 Langenargen (DE)

(74) Vertreter : Raue, Reimund
Zahnradfabrik Friedrichshafen AG Löwentaler
Strasse 100 Postfach 2520
D-7990 Friedrichshafen 1 (DE)

## Beschreibung

Diese Erfindung betrifft eine Schalteinrichtung für ein Zahnräderwechselgetriebe nach dem Oberbegriff von Anspruch 1. In einer solchen Schalteinrichtung erfolgt die Gassenwahl durch eine Verstellung des Gangschalthebels quer zur Fahrtrichtung und die Gangschaltung in Vor- und Rückwärtsfahrtrichtung. In der im Bereich des Fahrers angeordneten Schaltkonsole werden dabei alle Geberfunktionen, die zum Schalten eines Wechselgetriebes nötig sind, ermittelt und über Druckmittel auf die am Getriebe angeordneten und auf eine Schaltwelle wirkenden Wähl- und Schaltzylinder übertragen.

Je nach Art des Zahnräderwechselgetriebes — z. B. nur als Hauptgetriebe oder mit einem Gruppengetriebe erweitert oder noch mit einer Splitgruppe als Vielganggetriebe ausgebildet — sind die Anforderungen an eine solche Schaltung sehr hoch, weil ja nicht nur die gewollte Umschaltung über ein Druckmittel übertragen werden muß, sondern, wie aus einem mechanisch geschalteten Getriebe bekannt, auch noch für den Fahrer erkennbare Rückmeldungen über den Schaltzustand im Getriebe selbst nötig sind.

Eine solche, z. B. pneumatische Schalteinrichtung ist aus der GB-PS 1 179 426 bekannt, mit einer Schaltkonsole und einem Gangschalthebel, der in der Schaltkulisse nach dem HH-Schaltbild für acht Vorwärts- und einen Rückwärtsgang schaltbar ist. Die Schaltsperren wirken in Abhängigkeit von der Stellung der Schaltkupplung über zwei Sperrzylinder und eine Kippwelle auf den Handschalthebel und die Rückmeldung für den eingelegten Gang wird am Schaltzylinder über Schaltventile mechanisch ausgelöst.

Solche Einrichtungen genügen nicht mehr den Anforderungen, die an eine Schalteinrichtung bei einem modernen Getriebe gestellt werden, benötigen allein für die Wähl- und Schaltübertragung viele Verbindungsleitungen und sind in der Herstellung und Abstimmung sehr aufwendig.

Es ist deshalb Aufgabe der Erfindung, eine Schalteinrichtung nach dem Oberbegriff von Anspruch 1 weiterzuentwickeln und Aufbau und Bedienung zu vereinfachen.

Diese Aufgabe wird mit den kennzeichnenden Merkmalen vom Anspruch 1 erfüllt.

Durch die Anordnung einer Geberwelle und von mit dieser zusammenwirkenden 3/2-Wegeventilen in der Schaltkonsole im Bereich des Fahrers ist es möglich, in relativ einfacher Weise die gewollten Signale für die beabsichtigten Schaltungen auf Druckmittel zu übertragen, durch das eine im Prinzip bekannte Schaltwelle am Getriebe über Wähl- und Schaltzylinder gleichfalls in einfacher Weise verstellt wird. Durch diese Anordnung ist es auch möglich, Sicherheitseinrichtungen für die Gassenwahl einfach anzuordnen. Besonders vorteilhaft ist es auch, durch geschickte Anordnung der 3/2-Wegeventile und der Steuerkurven auf der Geberwelle die fünf Gassen der HH-Schaltanordnung auf die drei notwendigen Gassen im Hauptgetriebe über einen Dreistellungswählzylinder umzuwandeln, so daß die Schaltwelle nur noch einen Schaltfinger zum Verschieben der Schaltstangen benötigt. Auch die Anordnung der je 3/2-Wegeventile an der Geber- und Schaltwelle ist vorteilhaft. In Verbindung mit der als Kolben verschiebbar wirkenden und mit je einer Steuerkurve auf der Schaltwelle zusammenarbeitenden 3/2-Wegeventilen wird nicht nur eine für den Fahrer fühlbare Rückmeldung erzielt, sondern es ist auch möglich, einen einfachen Zweistellungsschaltzylinder für die drei Schaltstellungen zu benutzen.

In den Ansprüchen 2 bis 12 wird die Erfindung besonders vorteilhaft ausgestaltet.

Die Ausgestaltung der als Kolben radial verschiebbar ausgeführten 3/2-Wegeventile im Zusammenhang mit jeweils einer mehrstufigen, in Umfangsrichtung verlaufenden Steuerkurve auf der Schaltwelle nach den Ansprüchen 2 und 3 ist, gemessen an den erreichten Funktionen, einfach im Aufbau und auch einfach für die Herstellung, zumal diese Funktionen ergänzt sind durch ein Wechselventil nach Anspruch 4, das in dem gleichen Steuerblock angeordnet ist. Der Abgriff des Druckes nach Anspruch 4 zwischen den 3/2-Wegeventilen und dem Zweistellungsschaltzylinder ermöglicht in Verbindung mit der Kolbeneinrichtung, in der Schaltkonsole in einfacher Weise die Beendigung der Synchronisierung und die vollzogene Gangschaltung zu erkennen.

Mit nur zwei 3/2-Wegeventilen und einer mit diesen zusammenwirkenden in Umfangsrichtung sich erstreckenden Steuerkurve auf der Geberwelle ist es nach Anspruch 5 möglich, die relativ komplizierte Verstellung der Schaltwelle und die drei Schaltstellungen und den wie bei einer rein mechanischen Schaltung dem Fahrer vertrauten Synchronpunkt als Steuerdruck in der Rückmeldung zu vermitteln.

Die Wähleinrichtung, in der Ausgestaltung nach den Ansprüchen 6 und 7, verwirklicht in einfacher Weise die Wählfunktion und der Dreistellungswählzylinder hat, bis auf den Anschlagring, nur eine glatte, nicht abgesetzte Bohrung.

Dieser Aufbau der druckmittelbetätigten Schaltung eignet sich auch besonders gut für ein Vielganggetriebe (Anspruch 8 und 9), weil die Gruppenumschaltung in einem HH-Schaltbild und die Umschaltung der Splitgruppe in gewohnter Weise mit einem Schalthebel am Gangschalthebel erfolgen kann.

Bei Getrieben mit einer bekannten Kupplungsbetätigung über z. B. ein Fußpedal, wird in einfacher Weise ein 3/2-Wegeventil mit dieser Betätigungseinrichtung verbunden, so daß nur Druckmittel zum Verstellen zur Verfügung steht, wenn die Kupplung geöffnet ist. Besonders vorteilhaft ist die Anwendung bei einem Zahnräderwechselgetriebe nach Anspruch 11 mit einer Wandlerschaltkupplung, weil die Betätigung der Trenn- und Wandlerüberbrückungskupplung in Abhängigkeit von dem Druck, der nach dem Wechselventil im Steuerblock anliegt, erfolgen kann. Dadurch entfällt der allgemein bekannte Druckschalter in einer WSK-Steuerung und die Druckleitung für die Kolbenanlage am Gangschalthebel wird für eine zweite Funktion mitgenutzt bei gleichzeitigem Wegfall des Schaltventils zwischen der Druckmittelquelle und den 3/2-Wegventilen. Und schließlich ist es möglich, in einfacher Weise in der Schaltkonsole noch eine Kolbeneinrichtung, die mit der Geberwelle über einen Schleppstift zusammenwirkt, nach Anspruch 12 anzuordnen, wobei diese Einrichtung, insbesondere bei einem Vielganggetriebe, dem Fahrer nicht nur die optimale Bedienung des Getriebes ermöglicht, sondern auch noch zur Schalterleichterung in Verbindung mit der Auffindung des jeweilig richtigen Ganges führt, so daß der Fahrer besser und aufmerksamer sein Fahrzeug führen kann und nicht mehr über Gebühr abgelenkt wird.

Weitere Einzelheiten der Erfindung werden anhand eines Ausführungsbeispieles und anhand von Zeichnungen erläutert, wobei die Einzelheiten der Zeichnung Gegenstand der Erfindung sind.

Es zeigen :

Fig. 1   die Schaltkonsole mit Gangschalthebel und die an der Geberwelle angeordneten 3/2-Wegeventile in schematischer Darstellung.

Fig. 1A  die am Zahnräderwechselgetriebe, besonders im Bereich der Schaltwelle, angeordneten Einrichtungen in schematischer Darstellung.

Fig. 2   ein Zahnräderwechselgetriebe als Vielganggetriebe mit den Einrichtungen zur Gangschaltung, schematisch dargestellt.

Fig. 3   ein Zahnräderwechselgetriebe nach Fig. 2 in einer anderen Ansicht.

Fig. 4   ein Steuerschema für die Kolbeneinrichtung in der Schaltkonsole.

Fig. 5   eine Tabelle über geschaltete Schaltventile, bezogen auf die angebotenen Gänge.

Fig. 6   Schaltkonsole mit Gangschalthebel im Teilschnitt.

Fig. 7   Schaltkonsole nach Fig. 6, Ansicht in Fahrtrichtung.

Fig. 8   Schaltkonsole mit Kolbeneinrichtung in Draufsicht und im Schnitt.

Fig. 9   Schaltbild mit Sperrkulisse und Darstellung der Kraftschwellen in Schalt- und Wählrichtung.

Fig. 10  Drehzahlplan.

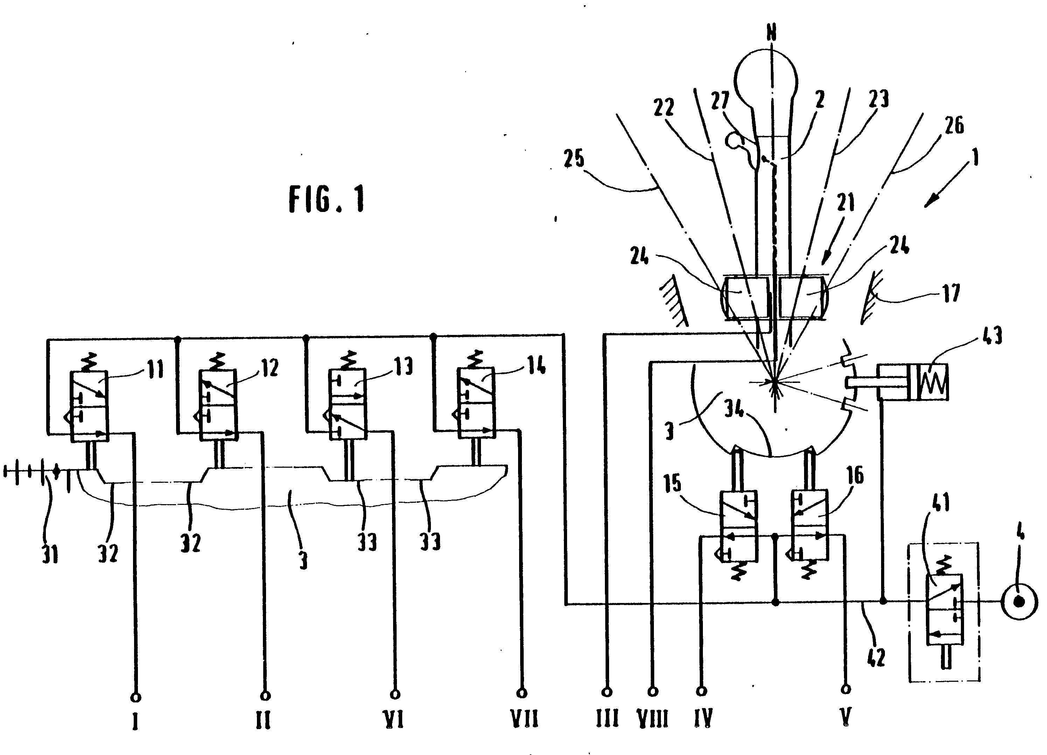

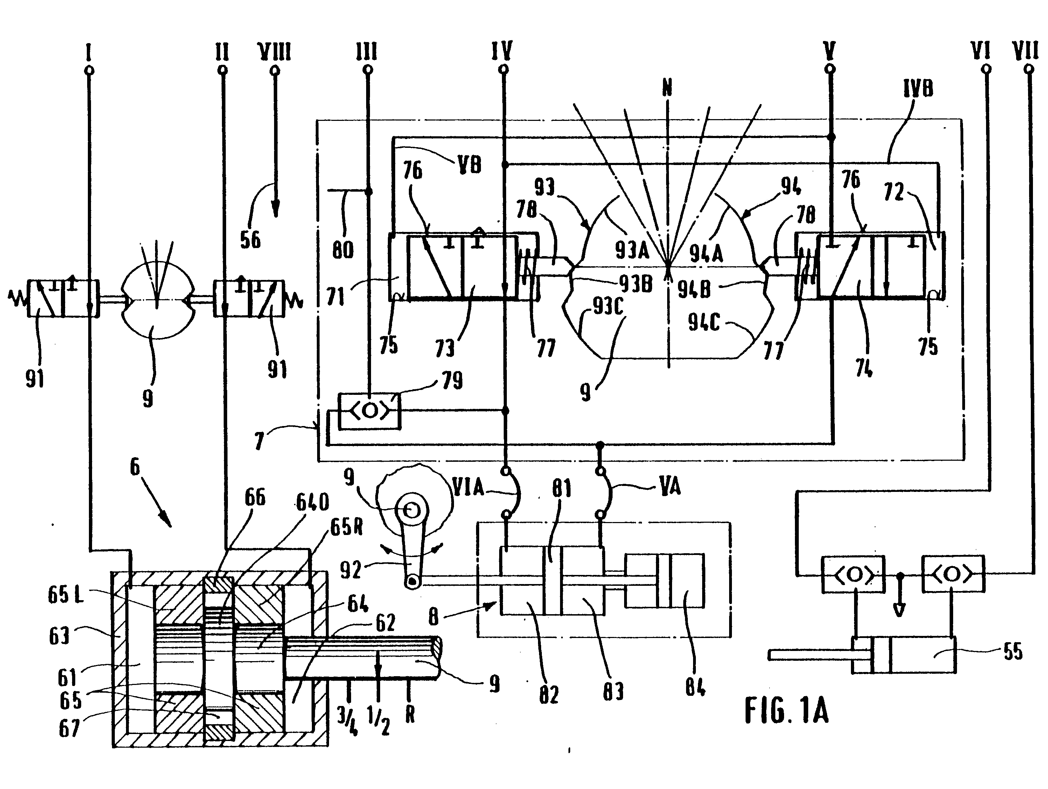

In Fig. 1 ist die im Fahrerhaus, z. B. eines Kraftfahrzeuges, angeordnete Schaltkonsole 1 mit dem Gangschalthebel 2 der Geberwelle 3 und allen 3/2-Wegeventilen, die von der Geberwelle betätigt werden, dargestellt. Von einer Druckmittelquelle 4 werden über ein Schaltventil 41 bei der Anwendung von einem Zahnräderwechselgetriebe 5 mit vom Fahrer, z. B. über ein Kupplungspedal, direkt betätigten Hauptkupplung die 3/2-Wegeventile an der Geberwelle über eine Hauptdruckleitung 42 mit Druckmittel, z. B. Luft, nur dann versorgt, wenn die Kupplung geöffnet ist. Die Geberwelle 3 wird bei einem Vielganggetriebe über den Gangschalthebel 2 in z. B. fünf Wählstellungen — Gassen 31 — verschoben und in drei Schaltstellungen — Neutral ; Gänge 1, 3, 5, 7 ; Gänge R, 2, 4, 6, 8 — nach dem HH-Schaltbild direkt verdreht. Über die Wählbewegung werden die beiden nebeneinander angeordneten 3/2-Wegeventile 11, 12 von einer in Achsrichtung der Geberwelle 3 sich erstreckenden Steuerkurve 32 so verstellt, daß die Leitungen I und II wie folgt mit Druckmittel beaufschlagt oder entlüftet sind :

| Gassenstellung | Leitung I | Leitung II |
|:---:|:---:|:---:|
| R | x | - |
| 1/2 | x | x |
| 3/4 | - | x |
| 5/6 | x | x |
| 7/8 | - | x |

Beim Übergang von der Gasse 3/4 auf 5/6 oder umgekehrt erfolgt über eine weitere Steuerkurve 33 die wechselweise Schaltung der 3/2-Wegeventile 13, 14 für die Umschaltung des Gruppengetriebes 52 über die Leitungen VI und VII und den Gruppenumschaltzylinder 55 (Fig. 1A).

In Umfangsrichtung an der Geberwelle 3 sind nebeneinander zwei weitere 3/2-Wegeventile 15, 16 angeordnet, die von einer Steuerkurve 34 für die Gangschaltung so betätigt werden, daß in der Neutralstellung N des Gangschalthebels 2 beide 3/2-Wegeventile 15, 16 auf Durchgang stehen und die Leitungen IV und V, die zum Steuerblock 7 führen, mit Druckmittel beaufschlagt sind. An der Hauptdruckleitung 42 ist noch ein Sperrzylinder 43 angeschlossen, der eine Verstellung der Geberwelle 3 und damit des Gangschalthebels 2 in Schaltrichtung — Verdrehung — immer dann verhindert, wenn die Hauptdruckleitung 42 entlüftet ist. In Verbindung mit der Schaltbewegung ist am Gangschalthebel 2 noch eine Kolbeneinrichtung 21 angeordnet, die über die Leitung III während eines Schaltablaufes immer mit Druckmittel beaufschlagt wird und damit eine Verstellung des Gangschalthebels 2 nur bis in die Schaltstellung 22, 23 ermöglicht — Anschlag des jeweiligen Kolbens 24 am Gehäuse 17 der Schaltkonsole 1 —. Erst wenn die Schaltung im Hauptgetriebe 51 beendet ist und in der Leitung III kein Druck mehr anliegt, kann der Gangschalthebel 2 in die entsprechende Gangendstellung 25, 26 gebracht werden. Hat das Zahnräderwechselgetriebe 5, wie in diesem Beispiel, noch eine Splitgruppe 53, so kann über den

3

Schalthebel 27 das GV-Ventil am und im Gangschalthebel 2 noch diese Gruppe geschaltet werden — Leitung VIII —.

Die Leitungen I bis VIII werden von der Schaltkonsole 1 direkt bzw. über Kupplungseinrichtungen an die am Zahnräderwechselgetriebe 5 angeordneten Einrichtungen geführt, die in Fig. 1A dargestellt sind.

Leitung I führt zu dem einen — z. B. linken 61 — und Leitung II zu dem anderen — rechten 62 — Kolbenraum eines Dreistellungswählzylinders 6, wobei in beiden Leitungen noch je ein Sicherheitsventil 91 angeordnet ist. Diese wirken mit der Schaltwelle 9 zusammen und sind nur in der Neutralstellung derselben auf Durchgang geschaltet, so daß eine axiale Verstellung — in Wählrichtung — der Schaltwelle 9 am Zahnräderwechselgetriebe 5 nur in dieser Stellung möglich ist.

Der Dreistellungswählzylinder 6 besteht aus einem Gehäuse 63, einem mit der Schaltwelle fest verbundenen inneren Kolben 64, der axial mittig einen im Durchmesser größeren Bund 640 aufweist. Zwei gleiche Kolbenbüchsen 65 sind links und rechts von diesem Bund so angeordnet, daß sie am Bund anliegend gleich lang mit dem inneren Kolben sind. In der Mittelstellung — wie dargestellt — sind stirnseitig auf beiden Seiten vom inneren Kolben 64 und den Kolbenbüchsen 65 Kolbenräume 61, 62 angeordnet, deren axiale Erstreckung jeweils einem Gassenabstand zwischen den Gassen 1/2 zu R und 1/2 zu 3/4 auf der Schaltwelle 9 entsprechen.

In der im Durchmesser gleichen Bohrung im Gehäuse 63 ist axial in der Mitte ein Anschlagring 66 gleich breit wie der Bund 640 am inneren Kolben 64 angeordnet und begrenzt die Kolbenbüchsen 65 beim axialen Verschieben. Der sich zwischen dem Anschlagring und dem Bund ergebende freie Raum 67 ist immer entlüftet.

Der Dreistellungszylinder wirkt wie folgt :

In der Mittelstellung — Gasse 1/2 im Hauptgetriebe 51 — greift der Schaltfinger der Schaltwelle 9 in die Schubstange, die mit der Schaltschwinge für die Gangschaltkupplung 1/2 verbunden ist, ein. Beide Kolbenräume 61, 62 sind befüllt und die Mittelstellung wird über die Kolbenbüchsen 65 in Verbindung mit dem Anschlagring 66 fixiert. Dieser Schaltzustand tritt auf, wenn die Geberwelle 3 in den Gassen 1/2 und 5/6 — siehe Tabelle — sich befindet. Wird der Kolbenraum 62 entlüftet — Gasse R am Geberzylinder 3 — verschiebt sich der innere Kolben 64 nach rechts bis zum Anschlag, wobei der Bund 640 die rechte Kolbenbüchse 65R mitnimmt. Die Schaltwelle 9 befindet sich in der Stellung der Gasse R.

Wird aus der Mittelstellung heraus der linke Kolbenraum 61 entlüftet, so wird der innere Kolben vom Druck im Kolbenraum 62 bis zum Anschlag nach links bewegt, wobei der Bund 640 die linke Kolbenbüchse 65L mitnimmt. Diesem Schaltzustand entspricht eine Gassenstellung der Geberwelle von Gasse 3/4 und 7/8 und die Schaltwelle 9 steht in der Gasse 3/4 des Hauptgetriebes. Aus den fünf Gassen der Geberwelle 3 werden über den Dreistellungszylinder 6 in Verbindung mit der Steuerkurve 32 und den beiden 3/2-Wegeventilen 11, 12 die drei Gassen des Hauptgetriebes 51 erreicht.

Der Steuerblock 7 besteht aus der Schaltwelle 9, auf der zwei mehrstufige Steuerkurven 93, 94, die in Umfangsrichtung verlaufen, angeordnet sind und mit je einem in je einer Bohrung 75 im Gehäuse 76 des Steuerblockes 7 radial verschiebbaren 3/2-Wegeventil 73, 74 zusammenwirken und die von je einer Feder 77 nach radial außen gedrückt werden. Von den im ganzen verschobenen 3/2-Wegeventilen 73, 74 werden die Leitungen IV und IV A und V und VA zum Zweistellungswählzylinder 8 in einer ersten Schaltstellung verbunden oder in einer zweiten Schaltstellung abgesperrt und die Leitungen IVa und Va zwischen dem Steuerblock und dem Zweistellungswählzylinder 8 entlüftet. Die Kolbenräume 71, 72 der als Kolben wirkenden 3/2-Wegeventile 73, 74 sind jeweils mit den Leitungen, die zu den anderen 3/2-Wegeventilen führen, verbunden (V mit 71 über V B ; IV mit 72 über IV B). An die Leitungen IV A, V A ist noch ein Wechselventil 79 angeschlossen, dessen Abgang, Leitung III, wie beschrieben, die Kolbeneinrichtung 21 (Fig. 1) mit Druckmittel versorgt.

Der Zweistellungsschaltzylinder 8 hat einen Kolben 81, zwei Kolbenräume 82, 83 sowie eine in beiden Endstellungen wirkende Dämpfeinrichtung 84 und verstellt über einen Stellhebel 92 die Schaltwelle 9 in Richtung der Gänge 1, 3, 5, 7 bzw. R, 2, 4, 6, 8 und auch in die Neutralstellung.

Der Steuerblock 7, in Verbindung mit dem Zweistellungsschaltzylinder 8, wirkt wie folgt :

In der Neutralstellung des Gangschalthebels 2 werden von der in Umfangsrichtung an der Geberwelle 3 angeordneten Steuerkurve 34 beide 3/2-Wegeventile 15, 16 auf Durchgang geschaltet, so daß die Leitungen IV und V unter Druck stehen. Über die Leitungen V B wird der Kolbenraum 71 und IV B der Kolbenraum 72 befüllt und beide 3/2-Wegeventile 73, 74, die als Kolben wirken, werden gegen den Druck der Feder 77 in eine erste, innenliegende Stellung — wie dargestellt — verschoben. Die Taststifte 78 beider 3/2-Wegeventile sind dabei in einer labilen Lage zwischen dem jeweiligen inneren Kurventeil 93A, 94A und dem Kurventeil 93B, 94B, so daß in der leichten Pendelstellung der Taststifte 78 in Verbindung mit der Schaltwelle wechselweise beide 3/2-Wegeventile auf Durchgang geschaltet werden und auf diese Weise über die Leitungen IV A und V A und die Kolbenräume 82, 83 der Kolben 81 in der Mittelstellung und über den Stellhebel 92 auch die Schaltwelle 9 in der gezeichneten Neutralstellung fixiert wird.

Bei einer Verstellung des Gangschalthebels 2 in eine Schaltstellung 23, die den Gängen R, 2, 4, 6, 8 entspricht, wird die Leitung V entlüftet und über das 3/2-Wegeventil 73 und die Leitungen IV und IV A nur der Kolbenraum 82 weiter befüllt, so daß der Kolben 81 sich in die rechte Endlage bewegt, wobei die Schaltwelle 9 über den Stellhebel 92 im Uhrzeigersinn verdreht wird. Gleichzeitig wird über den nicht gezeichneten Schaltfinger die der Gasse zugeordnete Schaltstange, Schaltschwinge und Schiebemuffe ansynchronisiert und nach Gleichlauf geschaltet. Nunmehr befindet sich der Kolben 81 in einer Endlage.

Während dieses Vorganges ist über das 3/2-Wegeventil 73 die Druckversorgung des Kolbenraumes 82 gesichert, obwohl der Taststift 78 auf die Teilkurve 93B aufläuft, weil infolge der Entlüftung des Kolbenraumes 71 dieses 3/2-Wegeventil eine zweite, radial äußere Stellung einnimmt. Erst nach Durchführung der Schaltung — also bei der Erreichung der Endstellung von Kolben 81 — wird über die Wirkung der Teilkurve 93C über das 3/2-Wegeventil auch der Kolbenraum 82 entlüftet. Damit ist auch die Leitung III drucklos und die Kolbeneinrichtung 21 gibt den Schalthebel frei, so daß dieser in die Gangendstellung verschoben werden kann.

Nunmehr wird der Fahrer in bekannter Weise die Kupplung wieder einlegen, wobei das Schaltventil 41 die Druckmittelzufuhr absperrt. Bei einem Getriebe ohne Kupplungspedal wird über die Leitung III und 80 das Einlegen der Kupplung direkt bewirkt und das Schaltventil 41 kann entfallen. Am Zweistellungsschaltzylinder ist noch eine allgemein bekannte hydraulische Endlagendämpfeinrichtung 84 angeordnet, deren Wirkung z. B. in dem Herion-Taschenbuch 1. Ausgabe 1969 Seiten 44-46 ausführlich beschrieben ist.

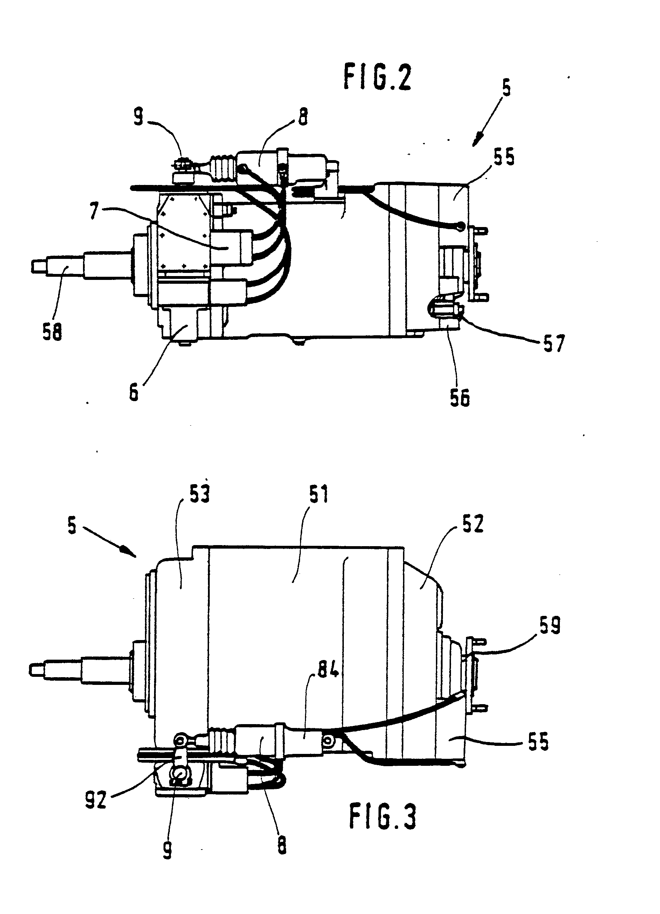

Die Fig. 2 und 3 zeigen das Zahnräderwechselgetriebe 5 in Ansicht (Fig. 2) und Draufsicht (Fig. 3) mit den z. B. vier Gänge aufweisenden Hauptgetriebe 51, dem Gruppengetriebe 52 und Splitgetriebe 53. Im Bereich der Schaltwelle 9 ist zum Verdrehen — Stellhebel 92 — derselben der Zweistellungsschaltzylinder 8 mit der Dämpfeinrichtung 84 angeordnet. Auch der Steuerblock 7 ist seitlich an der Schaltwelle 9 in deren mittleren Bereich angebaut, während der Dreistellungswählzylinder 6 in Verlängerung der Schaltwelle 9 angeordnet ist. Die Schaltzylinder 55, 56 für das Gruppengetriebe 52 und für das Splitgetriebe 53 sind, wie bekannt, nahe der Abtriebswelle 59 angeordnet, in deren Bereich noch ein Drehzahlgeber, vorrangig ein elektronischer Drehzahlgeber 57, angeordnet ist.

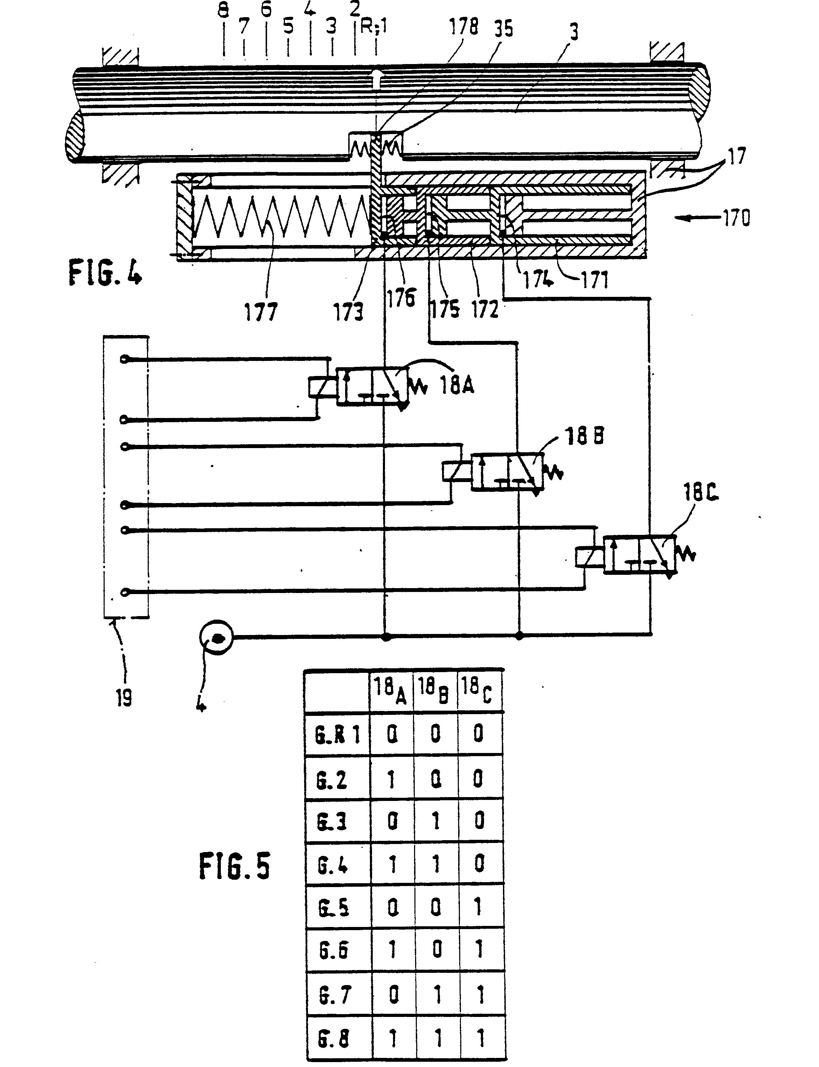

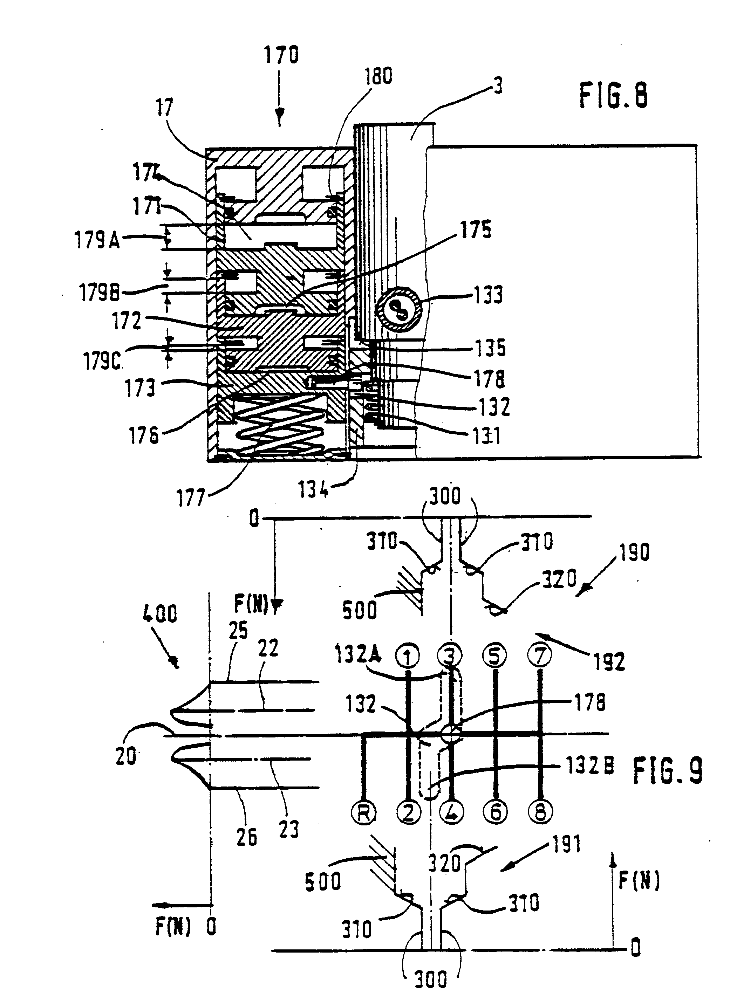

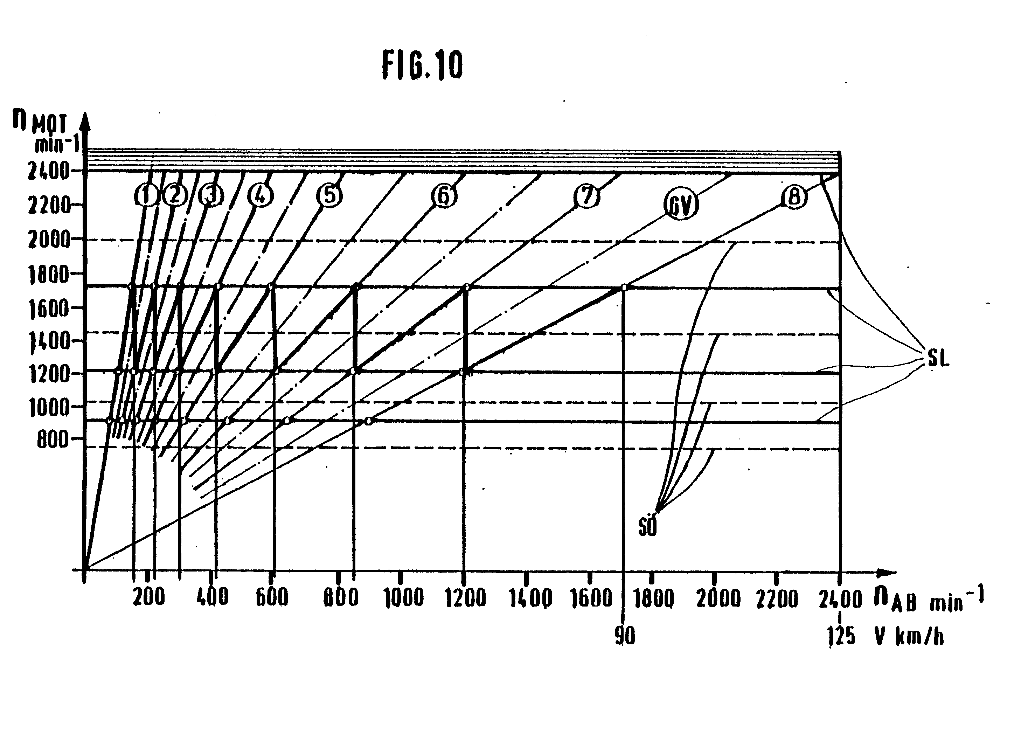

Die Fig. 4 zeigt das Steuerschema für die Schaltkonsole 1 mit der Geberwelle 3 und den angedeuteten axialen Verschiebungen um jeweils eine halbe Gasse (einen Gang), so daß jedem Vorwärtsgang eine Stellung dieser Geberwelle 3 zugeordnet ist. Die Kolbeneinrichtung 170 ist mit drei Kolben 171, 172, 173 und drei Kolben räumen 174, 175, 176 so aufgebaut, daß diese Stellungen der Geberwelle über einen Schleppbolzen 178 und eine Sperrkulisse 132 (Fig. 8, 9) erzielt wird. Den Kolbenräumen zugeordnet sind Schaltventile 18A, 18B, 18C, die diese befüllen oder entlüften. 4 ist eine Druckmittelquelle und gesteuert werden die Schaltventile, z. B. drehzahlabhängig, von einem elektronischen Baustein 19. Die Rückstellung der Kolben 171, 172, 173 erfolgt über eine sich am Konsolengehäuse 17 abstützende Rückstellfeder 177. Zwischen den im Kolben 173 befestigten Schleppbolzen 178 und der Geberwelle 3 ist noch eine Federeinrichtung 35 angeordnet.

Aus der Tabelle der Fig. 5 sind die jeweils auf Befüllung gestellten Schaltventile 18A, 18B, 18C erkennbar, die zur Verstellung der Geberwelle 3 in die Halbgassen der Gänge 1 bis 8 führen.

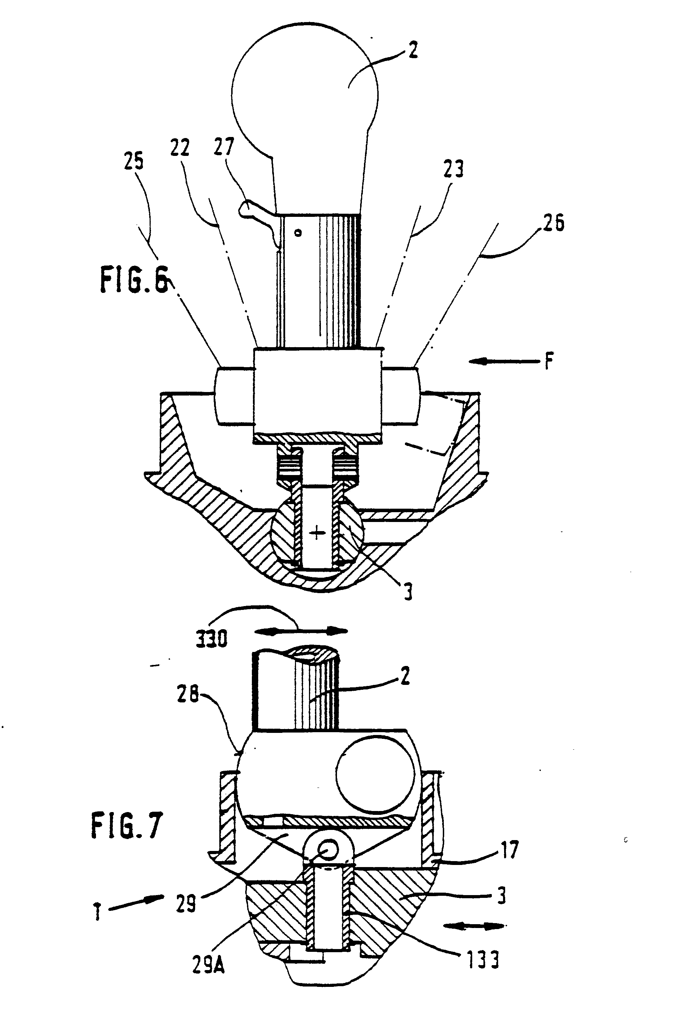

Die Fig. 6, 7 und 8 zeigen eine der möglichen konstruktiven Ausgestaltungen einer Schaltkonsole 1. Der Gangschalthebel 2 ist um den Mittelpunkt der Geberwelle 3 in die Schaltstellung 22, 23 und in die Gangendstellung 25 und 26 der Gänge schwenkbar und verdreht damit die Geberwelle 3 aus der gezeichneten Neutralstellung heraus um den gleichen Winkel (Fig. 6). Die Wählstellung der Gassen erfolgt über die Drehung um den Mittelpunkt einer Kugelführung 28, die am Gangschalthebel angebracht ist und mit einer Führung des Gehäuses 17 der Schaltkonsole 1 zusammenwirkt. Bei einer Betätigung des Gangschalthebels 2 quer zur Fahrtrichtung in die Wählstellungen der Gassen — wobei, wie bekannt, dies nur in der Neutralstellung möglich ist — wird die Geberwelle 3 über ein Gabelgelenk (Gabelbolzen 133, Gabel 29, Bolzen 29A) entgegengesetzt verschoben. Jede Gasse ist dabei, wie bei einer H- oder HH- Schaltung bekannt, einer Auslenkung des Gangschalthebels 2 in einer Wählstellung 330 zugeordnet, wobei, abweichend von diesen bekannten Schaltungen, jeder Gasse ein Gang entspricht (Fig. 4). Am Gangschalthebel 2 ist noch ein Schalthebel 27 zur Umsteuerung des Getriebes von z. B. einer leistungsorientierten Auslegung der Gangabstufung auf eine ökonomisch orientierte angeordnet, wobei über einen Schaltzylinder 56 z. B. eine Vorschaltgruppe (Splitgruppe) geschaltet wird.

Auf der Geberwelle 3 (Fig. 8) ist noch eine Hülse 134 drehfest, jedoch um je eine halbe Gasse (= einem Gang) nach jeder Richtung verschiebbar angeordnet, wobei die Mittellage über eine Federeinrichtung 131 sich ohne Belastung einstellt. In der Hülse 134 ist noch eine Sperrkulisse 132 angeordnet, in die der mit dem Kolben 173 fest verbundene Schleppbolzen 178 eingreift. Diese Sperrkulisse 132 ist so geformt, daß jeweils ein Gang aus der Neutralstellung heraus nur unter der Wirkung der Schaltkraft in die Schaltstellung, entweder der Gänge 1, 3, 5 ... oder der Gänge R, 2, 4 ..., verstellt werden kann und daß nach Überwindung der Federeinrichtung 134 in Wählrichtung auch die beiden benachbarten Gänge und bei Hochschaltungen nach einer weiteren Überwindung der Rückstellfeder 177 auch noch weitere Gänge schaltbar sind.

Rückschaltungen über einen Gang hinaus sind nicht möglich, weil sowohl die Hülse 134 an einem Stirnanschlag 135 an der Geberwelle 3 hart anliegt und auch die Kolben 171, 172, 173 in Verbindung mit einer evtl. Befüllung der Kolbenräume 174, 175, 176 eine Bewegung der Geberwelle 3 in diese Richtung, infolge der Verbindung über den Schleppbolzen 178, verhindert.

Die den Kolben 171, 172, 173 zugeordneten Hübe 179A, B und C sind bei Befüllung über Anschläge 180 begrenzt und so bemessen, daß der größte viermal und der mittlere zweimal so groß ist wie der kleinste Hub (binär codiert).

Den Gassen im Schaltbild, HH-Schaltbild 190, (in Fig. 9) sind nicht, wie bekannt, die Kraftschwellen — Rastenrückstellkräfte (DE-GM 78 02 241, Fig. 3) direkt zugeordnet, so daß der Fahrer die einzelnen Gassen des gesamten Schaltbildes auch erfühlen kann, sondern diese Kräfte sind an die jeweilige Stellung der Sperrkulisse 132 gebunden und veschieben sich im Schaltbild so, wie sich auch die Sperrkulisse 132 axial verschiebt. Die Sperrkulisse ist im Bereich der Neutralstellung abgekröpft und überdeckt zwei Halbgassen so, daß die eine von der Hälfte 132A deckungsgleich mit der Halbgasse, z. B. von der Neutralstellung bis in den 3. Gang, ist, während die zweite Halbgasse 132B von der Neutralstellung aus bis in die Gangstellung des 4. Ganges reicht, aber um eine halbe Gasse versetzt ist und damit z. B. zwischen dem 4. und dem 2. Gang liegt. Diesen beiden Hälften 132A, 132B der Sperrkulisse 132 sind auch die Sperr- und Rückstellkräfte 191, 192 zugeordnet, so daß z. B. in der dargestellten Lage der Sperrkulisse 132 zum Einlegen des 3. Ganges keine Wählkräfte, also in Achsrichtung, aufgebracht werden müssen.

Wie allgemein bekannt, sind lediglich bei Verstellungen des Gangschalthebels 2 von der Neutralstellung 20 in eine Schaltstellung 22, 23 und nach z. B. der Erzielung des Gleichlaufes in die Endstellungen 25, 26 die Schaltkraft zur Überwindung der Kraftschwelle 400 und die Synchronisierkraft aufzubringen. Soll jedoch, z. B. in dieser Stellung der Sperrkulisse 132, der 4. Gang bzw. der 2. Gang eingelegt werden, so sind noch die in beiden Richtungen wirkenden ersten Kraftschwellen 310 durch Wählkräfte zu überwinden. Die Sperrkulisse 132 wird bei beiden Schaltungen dabei um eine halbe Gasse verschoben, was durch die Feder 131 zwischen der Hülse 134 und der Geberwelle 3 ermöglicht wird (Fig. 8). Während bei beabsichtigten und auch zugelassenen Hochschaltungen weitere Kraftschwellen 320 durch entsprechende Wählkräfte zu überwinden sind, wird eine weitere Rückschaltung aus der Stellung dieser Sperrkulisse 132 heraus verhindert, weil beim Hochschalten die Rückstellfeder 177 überdrückt werden kann, während in Rückschaltrichtung die Bewegung der Hülse 134 und auch der Geberwelle 3 mit der Kolbeneinrichtung blockiert ist. Die axiale Verschiebung der Sperrkulisse 132 erfolgt über die drehzahlabhängige Befüllung der Kolbenräume 174 bis 176, entsprechend der Tabelle Fig. 5, durch die Schaltventile 18A bis 18C, die ihre Schaltbefehle, z. B. drehzahlabhängig, von einem elektronischen Baustein 19 (Fig. 4) erhalten.

In der Stellung der Fig. 9 wird dem Fahrer der 3. Gang zum Schalten empfohlen, wobei er diesen gar nicht erkennen muß, denn er muß ja nur erfühlen, in welcher Richtung — in Fahrt- oder in Gegenfahrtrichtung — der geringste Schaltwiderstand vorhanden ist. Im Normalfall wählt der Fahrer also nicht einen von acht Gängen, sondern nur von zwei Gängen aus. Darüber hinaus hat er die Möglichkeit, wie bereits beschrieben, die beiden benachbarten Gänge 2 und 4, jedoch unter Aufbringung größerer Kräfte, zu wählen. Mit dem Schalthebel 27 kann der Fahrer in bekannter Weise die Splitgruppe des Getriebes zusätzlich schalten, so daß er noch die Auswahl zwischen einer ökonomisch- oder leistungsorientierten Fahrweise hat. Wie aus dem vereinfachten Wegediagramm der Fig. 10 zu ersehen, sind bei einer leistungsorienterten Fahrweise die Schaltpunkte gegenüber einer ökonomisch informierten Fahrweise in Richtung auf höhere Drehzahlen zu verschoben.

Bezugszeichen

| | |
|---|---|
| 1 | Schaltkonsole |
| 11, 12 | 3/2-Wegeventile für die Wählbewegung |
| 13, 14 | 3/2-Wegeventile für die Gruppenumschaltung |
| 15, 16 | 3/2-Wegeventile für die Schaltbewegung |
| 17 | Gehäuse |
| 18A bis 18C | Schaltventile |
| 19 | Elektronischer Baustein F |
| 131 | Federeinrichtung |
| 132 | Sperrkulisse |
| 132A | Eine Hälfte der Sperrkulisse |
| 132B | Andere Hälfte der Sperrkulisse |
| 133 | Gabelbolzen |
| 134 | Hülse |
| 135 | Anschlag |
| 170 | Kolbeneinrichtung |
| 171 bis 173 | Kolben |
| 174 bis 176 | Kolbenräume |
| 177 | Rückstellfeder |
| 178 | Schleppbolzen |
| 179A bis 179C | Hübe |
| 180 | Anschläge |
| 190 | Schaltbild |
| 191 | Rast-, Wähl-, Rückstellkräfte |
| 192 | Rast-, Wähl-, Rückstellkräfte |
| 2 | Gangschalthebel |
| 20, N | Neutralstellung |
| 21 | Kolbeneinrichtung |

| | |
|---|---|
| 22 | Schaltstellung der Gänge 1, 3, 5, 7 |
| 23 | Schaltstellung der Gänge R, 2, 4, 6, 8 |
| 24 | Kolben |
| 25 | Gangendstellung der Gänge 1, 3 .. |
| 26 | Gangendstellung der Gänge R, 2 .. |
| 27 | Schalthebel für GV-Ventil |
| 28 | Kugelführung |
| 29 | Gabel |
| 29A | Bolzen |
| 3 | Geberwelle |
| 31 | Gassen |
| 32 | Steuerkurve wählen |
| 33 | Steuerkurve Gruppenumschaltung |
| 34 | Steuerkurve schalten |
| 35 | Federeinrichtung |
| 300 | Kraftschwelle in Wählrichtung |
| 310 | Erste Kraftschwelle in Wählrichtung |
| 320 | Weitere Kraftschwellen in Wählrichtung |
| 330 | Wählstellungen |
| 4 | Druckmittelquelle |
| 41 | Schaltventil |
| 42 | Hauptdruckleitung |
| 43 | Sperrzylinder |
| 400 | Kraftschwelle in Schaltrichtung |
| 5 | Zahnräderwechselgetriebe |
| 51 | Hauptgetriebe |
| 52 | Gruppengetriebe |
| 53 | Splitgetriebe |
| 55 | Gruppenumschaltzylinder |
| 56 | Splitumschaltzylinder |
| 57 | Elektronischer Tachometer |
| 58 | Antriebswelle |
| 59 | Abtriebswelle |
| 500 | Formschlüssige Sperre |
| 6 | Dreistellungswählzylinder |
| 61 | Kolbenraum links |
| 62 | Kolbenraum rechts |
| 63 | Gehäuse |
| 64 | Innerer Kolben |
| 640 | Bund |
| 65 | Kolbenbüchsen |
| 65R | Kolbenbüchse rechts |
| 65L | Kolbenbüchse links |
| 66 | Anschlagring |
| 67 | Entlüfteter Raum |
| 7 | Steuerblock |
| 71 | Kolbenraum |
| 72 | Kolbenraum |
| 73 | 3/2-Wegeventil als Kolben |
| 74 | 3/2-Wegeventil als Kolben |
| 75 | Bohrung |
| 76 | Gehäuse - Steuerblock |
| 77 | Feder |
| 78 | Taststifte |
| 79 | Wechselventil |
| 8 | Zweistellungsschaltzylinder |
| 80 | Leitung zur Kupplung bei WSK |
| 81 | Kolben |
| 82/83 | Kolbenräume |
| 84 | Dämpfeinrichtung |
| 9 | Schaltwelle |
| 91 | Sicherheitsventil |
| 92 | Stellhebel |
| 93 | Steuerkurve |
| 93A bis 93C | Kurventeile |

0 180 583

| 94 | Steuerkurve |
|---|---|
| 94A bis 94C | Kurventeile |
| I | Erste Leitung zum Wählzylinder |
| II | Zweite Leitung zum Wählzylinder |
| III | Druckleitung vom Wechselventil an Kolbeneinrichtung |
| IV | Erste Leitung zum Steuerblock |
| V | Zweite Leitung zum Steuerblock |
| VI | Erste Leitung für Gruppenumschaltzylinder |
| VII | Zweite Leitung für Gruppenumschaltzylinder |
| VIII | Leitung zum Splitumschaltzylinder |
| IV A/V A | Leitungen zwischen Steuerblock und Zweistellungsschaltzylinder |
| IV B/V B | Leitungen an die Kolbenräume 71, 72 |
| SL | Schaltpunkte leitungsorientiert |
| SÖ | Schaltpunkte ökonomisch orientiert |
| F | Fahrtrichtung |

**Patentansprüche**

1. Druckmittelbetätigte Schalteinrichtung für ein Zahnräderwechselgetriebe, vorrangig für ein Vielganggetriebe, bei dem der Gangschalthebel eine Bewegung nach dem HH-Schaltbild ausführt und im Bereich des Fahrers an einer Schaltkonsole angeordnet ist, mit Einrichtungen zum Wählen der Gassen, zum Schalten der Gänge und zum Steuern von Ventilen, die Druckmittel von einer Druckmittelquelle zu je einem am Getriebe angeordneten Dreistellungs-Wählzylinder (6) zum Wählen der Gassen und Zweistellungs-Schaltzylinder zum Schalten der Gänge leiten, wobei die Schalteinrichtung noch Sperrmittel und Einrichtungen zur fühlbaren Rückmeldung aufweist, durch die eine Gangschaltung verhindert wird, wenn die Kupplung noch geschlossen ist und dem Fahrer über die Kulissenstellung des Gangschalthebels angezeigt wird, in welcher Schaltstellung sich das Getriebe befindet, wobei an der Schaltkonsole in Gassenwahlrichtung nebeneinander angeordnete 3/2-Wegeventile (11, 12) vorgesehen sind, die zur Gassenwahl mit Steuerkurvenelementen (32) zusammenwirken und zwei weitere 3/2-Wegeventile (15, 16) vorgesehen sind, die zur Einleitung der Schaltbewegung dienen, dadurch gekennzeichnet, daß eine Geberwelle (3) an der Schaltkonsole (1) angeordnet ist, die zum Wählen der Gassen verschoben und zum Schalten der Gänge verdreht wird, diese Wähl- und Schaltbewegungen über an der Geberwelle (3) angeordnete Steuerkurven (32, 34) und die 3/2-Wegeventile (11, 12 ; 15, 16) auf die am Zahnräderwechselgetriebe befestigte Wähl- und Schaltzylinder übertragen wird, daß die zwei weiteren 3/2-Wegeventile (15, 16) in Gangschaltrichtung nebeneinander angeordnet sind und in der Zuführleitung (I, II) zwischen den jeweiligen 3/2-Wegeventilen (11, 12) und dem Dreistellungs-Wählzylinder (6) je ein mit der Schaltwelle (9) zusammenwirkendes und nur in der Neutralstellung auf Durchfluß stehendes Sicherheitsventil (91) angeordnet ist und in den beiden Zuführleitungen (IV, IV A und V, V A) für den Zweistellungs-Schaltzylinder (8) je ein als Kolben verschiebbar ausgebildetes und jeweils mit einer in Umfangsrichtung wirkenden Steuerkurve 93, 94 auf der Schaltwelle (9) zusammenarbeitendes 3/2-Wegeventil (73, 74) so angeordnet ist, daß der Zweistellungsschaltzylinder (8) auch in der Mittelstellung (N) fixiert werden kann.

2. Druckmittelbetätigte Schalteinrichtung nach Anspruch 1, dadurch gekennzeichnet, daß die mit der Schaltwelle (9) zusammenarbeitenden und als Kolben verschiebbar ausgebildeten 3/2-Wegeventile (73, 74) in je einer Bohrung (75) axial verschiebbar angeordnet sind, von je einer Druckfeder (77) nach radial außen gedrückt werden und vom Druckmittel, das dem jeweils anderen 3/2-Wegeventil zufließt, nach radial innen, entgegen dem Federdruck auf die Steuerkurve (93, 94) zu, bewegt wird.

3. Druckmittelbetätigte Schalteinrichtung nach Anspruch 2, dadurch gekennzeichnet, daß die den 3/2-Wegeventilen (73, 74) auf der Schaltwelle (9) zugeordneten Steuerkurven (93, 94) mehrstufig (93A bis C, 94A bis C) ausgebildet sind und daß in der Neutralstellung (N) beide Abtastelemente (78) zwischen der jeweils radial inneren (93A, 94A) und radial mittleren (93B, 94B) der Steuerkurve (93, 94) auf der Übergangsschräge sich abstützen.

4. Druckmittelbetätigte Schalteinrichtung nach Anspruch 3, dadurch gekennzeichnet, daß zwischen den beiden Zuleitungen (IV, IV A und V, V A) zum Zweistellungsschaltzylinder (8) noch ein Wechselventil (79) angeordnet ist, das Druckmittel an eine am Gangschalhebel (2) angeordnete Kolbeneinrichtung (21) leitet, die diesen so lange in der Schaltstellung (22, 23) blockiert, bis die Schaltung im Getriebe beendet ist.

5. Druckmittelbetätigte Schalteinrichtung nach Anspruch 4, dadurch gekennzeichnet, daß die in Umfangsrichtung nebeneinander angeordneten 3/2-Wegeventile (15, 16) an der Geberwelle (3) nur in Neutralstellung (N) des Gangschalthebels (2) beide auf Durchfluß geschaltet sind und in den jeweiligen Schalt- (22, 23) und Endstellungen (25, 26) nur das zugeordnete 3/2-Wegeventil (15, 16) das Druckmittel absperrt.

6. Druckmittelbetätigte Schalteinrichtung nach Anspruch 1, dadurch gekennzeichnet, daß trotz der Verstellung der Geberwelle (3) in die Gassen nach dem HH-Schaltbild (R, 1/2, 3/4, 5/6, 7/8) die Schaltwelle (9) am Zahnräderwechselgetriebe (5) von einem Dreistellungswählzylinder (6) nur in die drei Gassen des Hauptgetriebes (51) verschoben wird, wobei zum Wählen der mittleren Gasse (1/2) beide Kolbenräume (61, 62) mit Druckmittel beaufschlagt werden.

7. Druckmittelbetätigte Schalteinrichtung nach Anspruch 6, dadurch gekennzeichnet, daß der Dreistellungswählzylinder (6) aus einem Gehäuse (63) und einem dreiteiligen Kolben (64, 65L, 65R) besteht, wobei der innere Kolben (64) fest mit der Schaltwelle (9) verbunden ist und axial in der Mitte einen im Durchmesser größeren Bund (640) aufweist, der zwei auf dem inneren Kolben (64) axial verschiebbar angeordnete Kolbenbüchsen (65L, 65R) in je einer Verschieberichtung begrenzt, die in der gleichen Richtung auch noch von einem gehäusefesten Anschlagring (66) am weiteren Verschieben gehindert werden und daß in der Mittelstellung — mittlere Gasse, z. B. 1/2 — der Bund (640) und der Anschlag (66) sich in axialer Richtung decken und daß die beiden Stirnseiten vom inneren Kolben (64) zur stirnseitigen Gehäusebegrenzung jeweils den gleichen Abstand haben, der dem Gassenabstand an der Schaltwelle (9) entspricht.

8. Druckmittelbetätigte Schalteinrichtung nach Anspruch 7, dadurch gekennzeichnet, daß auf der Geberwelle (3) in Achsrichtung nebeneinander noch zwei 3/2-Wegeventile (13, 14) zur Umschaltung des Gruppengetriebes (52) über einen Verstellzylinder (55) angeordnet sind.

9. Druckmittelbetätigte Schalteinrichtung nach Anspruch 8, dadurch gekennzeichnet, daß am Gangschalthebel (2) noch ein Schalthebel (27) für das GV-Schaltventil angeordnet ist, der über einen Verstellzylinder (56) das Spiltgetriebe (53) schaltet.

10. Druckmittelbetätigte Schalteinrichtung nach Anspruch 9, dadurch gekennzeichnet, daß zwischen der Druckmittelquelle (4) und den Schaltventilen (11 bis 16) in der Schaltkonsole (1) noch ein 3/2-Wegeventil (41) angeordnet ist, das nur auf Durchflußstellung steht, wenn bei manueller Kupplungsbetätigung diese geöffnet ist.

11. Druckmittelbetätigte Schalteinrichtung nach Anspruch 4, dadurch gekennzeichnet, daß zwischen dem Wechselventil (79) und der Kolbeneinrichtung (21) noch eine Leitung (80) zum Steuerventil angeschlossen ist, das die Betätigung der Schaltkupplung bewirkt.

12. Druckmittelbetätigte Schalteinrichtung nach einem der vorgenannten Ansprüche, dadurch gekennzeichnet, daß in der Schaltkonsole (1) noch eine Kolbeneinrichtung (170, Fig. 4) angeordnet ist, die die Federrastierung in Wählrichtung in Abhängigkeit von mindestens einem Fahrparameter des Fahrzeuges unterschiedlichen Gängen oder Gassen zuordnet, so daß dem Fahrer der jeweils günstige Gang oder die günstige Gasse zum Schalten angeboten wird.

**Claims**

1. Pressure medium actuated gear shifting arrangement for a gear changing transmission, primarily for a multi-speed transmission, in which the gear shift lever is moved according to the double H shift pattern, and a selector console is positioned within reach of the driver with arrangements for selecting the gates, shifting the gears and controlling the valves which conduct pressure medium from a pressure medium source both to a three-position selector cylinder (6) on the transmission for gate selection and to a two-position shift cylinder for the gearshifts, the shift arrangement also having locking means and arrangements for a perceptible feedback which prevents a gearshift when the clutch is still closed and the position of the gear shift lever in the gate indicates to the driver the shift mode of the transmission, the selector console being fitted with 3/2 directional valves (11, 12) arranged next to one another in the direction of gate selection and co-operating with cam elements (32) to select the gate, and fitted with two further 3/2 directional valves (15, 16) which serve to initiate the shift movement, characterized in that a selector shaft (3) fitted to the selector console (1) is displaced for gate selection and rotated for the gearshifts, these shift and selection movements being transmitted via cams (32, 34) on the selector shaft (3) and 3/2 directional valves (11, 12 ; 15, 16) to selection and shift cylinders attached to the gear changing transmission, and that two additional 3/2 directional valves (15, 16) are arranged next to one another in the direction of the gearshift, and a safety valve (91) co-operating with the control shaft (9) and permitting a through-flow only in the neutral position, is fitted in the conduits (I, II) between each of the 3/2 directional valves (11, 12) and the three-position selector cylinder (6), and a 3/2 directional valve (73, 74) which acts as a displaceable piston and co-operates with its respective cam (93, 94) on the control shaft (9) acting in a circumferential direction is so arranged in each of the two conduits (IV, IV A and V, V A) that the two-position shift cylinder (8) can also be held in a median position (N).

2. Pressure medium actuated gear shifting arrangement according to Claim 1, characterized in that the 3/2 directional valves (73, 74) cooperating with the control shaft (9) are disposed as displaceable pistons, each axially movable within its respective bore (75), forced radially outwards by their respective pressure springs (77) and propelled radially inwards to the cam (93, 94) against the spring pressure by the pressure medium flowing to the other 3/2 directional valve.

3. Pressure medium actuated gear shifting arrangement according to Claim 2, characterized in that the cams (93, 94) operating the 3/2 directional valves (73, 74) are multi-stepped (93A to C, 94A to C), and that in the neutral position (N) the two operating pins (78) are supported on the intermediate cam between the radial inner (93A, 94A) and the radial median (93B, 94B) cam faces (93, 94) respectively.

4. Pressure medium actuated gear shifting arrangement according to Claim 3, characterized in that between the two conduits (IV, IV A and V, V A) leading to the two-position shift cylinder (8) a further changeover valve (79) is fitted, which conducts pressure medium to a piston arrangement (21) on the gear shift lever (2) by means of which the latter is locked in the shift position (22, 23) until gear shifting has been completed within the transmission.

5. Pressure medium actuated gear shifting arrangement according to Claim 4, characterized in that 3/2 directional valves (15, 16) arranged next to one another on the selector shaft (3) in the circumferential direction are both open simultaneously to permit a through-flow only when the gear shift lever (2) is in the neutral position (N), and when in their respective shift (22, 23) and final (25, 26) positions only one of the 3/2 directional valves (15, 16) blocks the pressure medium.

6. Pressure medium actuated gear shifting arrangement according to Claim 1, characterized in that although the selector shaft (3) moves in the gates according to the double H shift pattern (R, 1/2, 3/4, 5/6, 7/8), the control shaft (9) of the gear changing transmission (5) is moved towards only three gates in the main transmission (51) by a three-position selector cylinder (6), and both piston chambers (61, 62) are pressurized by the pressure medium in order to select the median gate (1/2).

7. Pressure medium actuated gear shifting arrangement according to Claim 6, characterized in that the three-position selector cylinder (6) consists of a housing (63) and a three-part piston (64, 65L, 65R), the inner piston (64) being firmly attached to the control shaft (9) and having a collar (640) of greater diameter mounted axially in its centre, which limits the movement in the displacement direction of each of two axially shiftable piston bushings (65L, 65R) mounted on the inner piston (64) the bushings being prevented from moving further in the said direction also by a stop ring (66) firmly mounted to the housing, and that in the median position — middle gate, e. g. 1/2 — the collar (640) and the stop (66) are in axial alignment with one another and that the distance between the two end faces of piston (64) and the housing limits each correspond to the gate distance on the control shaft (9).

8. Pressure medium actuated gear shifting arrangement according to Claim 7, characterized in that two additional 3/2 directional valves (13, 14) are arranged next to one another on the selector shaft (3) in an axial direction in order to shift the range group (42) by a shift cylinder (55).

9. Pressure medium actuated gear shifting arrangement according to Claim 8, characterized in that an additional shift lever (27) operating the splitter control valve and selecting the splitter box (53) by means of a shift cylinder (56) is fitted to the gear shift lever (2).

10. Pressure medium actuated gear shifting arrangement according to Claim 9, characterized in that an additional 3/2 directional valve (41) that is arranged in a through-flow position if the clutch is actuated manually, is fitted in the selector console (1) between the pressure medium source (4) and the shift valves (11 to 16).

11. Pressure medium actuated gear shifting arrangement according to Claim 4, characterized in that an additional conduit (80) connected to the control valve and actuating the separating clutch is arranged between the changeover valve (79) and the piston arrangement (21).

12. Pressure medium actuated gear shifting arrangement according to the preceding claims, characterized in that an additional piston arrangement (170, Fig. 4) is integrated in the selector console (1) in such a way that it allocates the spring detents in the direction of selection to the various gears and gates in dependence on at least one of the vehicle's different drive parameters, so that the driver is encouraged to select the most favourable gear or gate displayed.

**Revendications**

1. Dispositif de changement de vitesse actionné par moyen de pression pour une boîte de vitesses à engrenages, prioritaire pour une boîte à plusieurs rapports dans laquelle le levier de sélection est guidé suivant la grille de changement de vitesse en double H., disposé sur une console de changement de vitesse près du conducteur, avec des aménagements permettant de choisir les couloirs, de passer les vitesses et de commander les soupapes qui conduisent les moyens de pression d'une source d'un moyen de pression vers un vérin de sélection à trois positions (6) disposés respectivement sur la boîte de vitesses pour choisir les couloirs et conduisant les vérins de commande à deux positions pour passer les vitesses, alors que le dispositif de commande montre encore des moyens de blocage et des dispositifs d'information de retour sensitifs, en raison desquels un passage de vitesse est empêché, si l'embrayage est encore fermé et il est indiqué au conducteur au moyen de la position du levier de changement de vitesse, dans quelle position de commande la boîte de vitesses se trouve, alors que sur la console de changement de vitesses des distributeurs 3/2 (11, 12) disposés les uns à côté des autres sont prévus, ayant une influence sur le choix des couloirs avec les éléments de cames de commande (32) et deux autres distributeurs 3/2 (15, 16) étant prévus, servant au guidage du mouvement de passage de vitesse, caractérisé en ce qu'un arbre sélecteur (3) est disposé sur la console de changement de vitesses (1), déplacé pour la sélection des couloirs et tourné pour le passage des vitesses, alors que ces mouvements de sélection et de passage des vitesses par l'intermédiaire des cames de commande (32, 34) disposées sur l'arbre sélecteur (3) et les distributeurs 3/2 (11, 12 ; 15, 16) sont transmis aux vérins de commande et de sélection fixés sur la boîte de vitesses à engrenages, de sorte que les deux autres distributeurs 3/2 (15, 16) sont disposés l'un à côté de l'autre dans le sens de sélection des couloirs et dans la conduite d'alimentation (I, II) entre les distributeurs 3/2 respectifs (11, 12) et le vérin de commande à trois positions (6) à chaque fois une soupape de sécurité (91) agissant avec l'arbre sélecteur (9) et seulement en position de point-mort est disposée pour permettre le passage du débit et dans les deux conduites d'arrivée (IV, IV A et V, V A) pour le vérin de commande à deux positions (8) respectivement un distributeur 3/2 (73, 74) est disposé de telle façon, en tant que piston coulissable et avec une came de commande 93, 94 agissant dans la direction circonférentielle sur l'arbre sélecteur (9), que le vérin de commande à deux positions (8) puisse être également fixé dans la position centrale (N).

2. Dispositif de changement de vitesse actionné par moyen de pression selon revendication 1, caractérisé en ce que les distributeurs 3/2 (73, 74) travaillant avec l'arbre sélecteur (9) et étant conçus en tant que piston coulissable, sont disposés dans un perçage respectif (75) de façon coulissable en sens axial étant pressés par un ressort de compression (77) respectif vers l'extérieur dans le sens radial et actionné par le moyen de pression alimentant l'autre distributeur 3/2 vers l'intérieur en sens radial contre le ressort de pression sur la came de commande (93, 94).

3. Dispositif de changement de vitesses actionné par moyen de pression selon revendication 2, caractérisé en ce que cames de commande (93, 94) affectées aux distributeurs 3/2 (73, 74) sur l'arbre de commande (9) sont à plusieurs étages (93A à C, 94A à C) et en ce que au point-mort (N), les deux éléments de balayage (78), entre respectivement l'élément radial intérieur (93A, 94A) et l'élément radial central (93B, 94B) de la came de commande (93, 94), prennent appui sur l'inclinaison transitoire.

4. Dispositif de changement de vitesses actionné par moyen de pression selon revendication 3, caractérisé en ce que entre les deux conduite d'arrivée (IV, IV A et V, V A) vers le vérin de commande à deux positions (8), une autre soupape à deux voies (79) est disposée, amenant le moyen de pression à un dispositif de pistons (21) placé sur le levier de sélection des vitesses (2), qui le bloque dans la position de commande (22, 23) jusqu'à ce que le processus d'enclenchement dans la boîte de vitesses soit terminé.

5. Dispositif de changement de vitesse actionné par moyen de pression selon revendication 4, caractérisé en ce que les distributeurs 3/2 (15, 16) disposés les uns à côté des autres dans le sens circonférentiel sur l'arbre sélecteur (3) ne sont commutés en position de débit que lorsque le levier de sélection des vitesses (2) est au point-mort (N) et en ce que dans les positions de commande (22, 23) et positions finales (25, 26) respectives, le blocage du moyen de pression n'est effectué que par le distributeur 3/2 (15, 16) disposé à cet effet.

6. Dispositif de changement de vitesse actionné par moyen de pression selon revendication 1, caractérisé en ce que, malgré le déplacement de l'arbre sélecteur (3) dans les couloirs selon la grille de passage des vitesses en double HM-AR, 1/2, 3/4, 5/6, 7/8), l'arbre de commande des vitesses (9) sur la boîte de vitesses à engrenages (5) est déplacé par un vérin de commande à trois positions (6) uniquement dans les trois couloirs de la boîte de vitesses principale (51), alors que pour sélectionner le couloir central (1/2), les deux emplacements des pistons (61, 62) sont alimentés en moyen de pression.

7. Dispositif de changement de vitesse actionné par moyen de pression selon revendication 6, caractérisé en ce que le vérin de commande à trois positions (6) est composé d'un carter (63) et d'un piston en trois parties (64, 65L, 65R), alors que le piston intérieur (64) est relié de façon fixe à l'arbre de commande (9) et à un collet (640) d'un diamètre plus élevé au milieu en sens axial, limitant deux douilles de pistons (65L, 65R) déplaçables en sens axial sur le piston intérieur (64), respectivement dans un sens de déplacement, ne pouvant, dans la même direction, continuer à se mouvoir à cause d'un anneau de butée (66), et en ce que, en position médiane — couloir central, p. ex. 1/2 — le collet (640) et la butée (66) se recouvrent en sens axial et les deux faces frontales du piston intérieur (64) vers l'extrémité frontale du carter sont respectivement à la même distance, correspondant à la distance du couloir sur l'arbre de commande (9).

8. Dispositif de changement de vitesse actionné par moyen de pression selon revendication 7, caractérisé en ce que sur l'arbre sélecteur, dans le sens de l'axe, deux autres distributeurs 3/2 (13, 14) servant à la commutation du groupe-relais (52) sont disposés par l'intermédiaire d'un vérin à cylindrée variable (55).

9. Dispositif de changement de vitesse actionné par moyen de pression selon revendication 8, caractérisé en ce que un levier de changement des rapports supplémentaires (27) est disposé pour la soupape de commande du doubleur de gamme sur le levier sélecteur (2) et commute le doubleur de gamme (53) au moyen d'un vérin de réglage (56).

10. Dispositif de changement de vitesse actionné par moyen de pression selon revendication 9, caractérisé en ce que entre la source du moyen de pression (4) et les vérins de commande (11 à 16) dans la console de changement de vitesse (1), un distributeur 3/2 (41) est disposé, se trouvant uniquement en position de débit, lorsqu'en cas d'actionnement manuel de l'embrayage, celui-ci est ouvert.

11. Dispositif de changement de vitesse actionné par moyen de pression selon revendication 4, caractérisé en ce que, entre la soupape à deux voies (79) et le dispositif de pistons (21) une conduite supplémentaire (80) est raccordée au vérin de commande, ayant pour effet d'actionner l'embrayage.

12. Dispositif de changement de vitesse actionné par moyen de pression selon les revendications précitées, caractérisé en ce que dans la console de changement de vitesse (1), un dispositif de pistons supplémentaire (170, Fig. 4) est disposé de façon à attribuer un verrouillage à ressort dans le sens de sélection en rapport avec au moins un paramètre de conduite du véhicule, aux divers rapports et couloirs, en sorte que la bonne vitesse ou le bon couloir de changement de vitesse soit proposé à chaque fois au conducteur.

FIG. 1

0 180 583

FIG. 1A

FIG.2

FIG.3

FIG. 4

FIG. 5

| | 18A | 18B | 18C |
|---|---|---|---|
| G.R 1 | 0 | 0 | 0 |
| G.2 | 1 | 0 | 0 |
| G.3 | 0 | 1 | 0 |
| G.4 | 1 | 1 | 0 |
| G.5 | 0 | 0 | 1 |
| G.6 | 1 | 0 | 1 |
| G.7 | 0 | 1 | 1 |
| G.8 | 1 | 1 | 1 |

FIG.6

FIG.7

FIG.8

FIG.9

# FIG.10

0 180 583